# EUROPEAN PATENT APPLICATION

(11) **EP 3 315 025 A1**
(43) Date of publication of application: **02.05.2018**
(21) Application number: 17187389.6
(22) Date of filing: 23.08.2017
(51) Int. Cl.: A01M 7/00

(54) **MULTIPURPOSE WATER TANK HAVING IMPROVED FILTERING FUNCTION**

(30) Priority: 01.11.2016 KR 20160144176
(71) Applicant: Powerrain Co.,Ltd., Jeju-si, Jeju-do 63298 (KR)
(72) Inventor: MUN, Mi Na, 63268 Jeju-si, Jeju-do (KR); PARK, Dae Han, 63268 Jeju-si, Jeju-do (KR)
(74) Representative: Zardi, Marco

(57) **Abstract**

Disclosed herein is a multipurpose water tank having an improved filtering function. The multipurpose water tank having an improved filtering function includes: an opening and closing cover configured to selectively open and close an opening portion formed in the top of the water tank; an accommodation space provided inside the water tank; a water introduction means provided on the upper portion of the water tank, and configured to filter agricultural water to be introduced into the water tank; and a pest control fluid introduction means provided on the side surface of the water tank, and configured to, when a pest control fluid is introduced into the water tank, filter out impurities included in the pest control fluid and then introduce the filtered pest control fluid into the water tank.

## Description

### BACKGROUND

### 1. Technical Field

The present invention relates generally to a multipurpose water tank having an improved filtering function, and more specifically to a multipurpose water tank having an improved filtering function, which is capable of resolving the inconvenience in which a user climbs a ladder or steps on a support and then introduces a pest control fluid when introducing the pest control fluid into a water tank, and reducing the obstruction of a sprinkler or spray nozzle during pest control work by filtering agricultural water and a pest control fluid to be introduced into the water tank.

### 2. Description of the Related Art

In order to cultivate crops, water-related farm work, such as watering, pest control, the distribution of an environment-friendly chemical, the distribution of a liquid fertilizer, the control of temperature/humidity, etc., must be performed. In order to perform such farm work, water tanks are essentially required.

Furthermore, watering, pest control, the distribution of an environment-friendly chemical, and the distribution of a liquid fertilizer are performed using sprinklers or spray nozzles. Since the smallest size of the holes of the sprinklers or spray nozzles is about 1 mm, it is highly important to use the sprinklers or spray nozzles without obstruction.

However, agricultural workers use the water of a reservoir or stream, underground water, rainwater, or the like as water required for the cultivation of crops. Accordingly, during the process of introducing such water into the water tanks, sand, small stones, and various types of impurities are introduced into the water tanks together with the water. As a result, the sprinklers or spray nozzles are obstructed during pest control work. If the quantity of impurities is large, the filtering function of filtration devices is easily lost, and this may become a cause of the breakdown of pumps.

Furthermore, in order to introduce pest control fluids or liquid fertilizers into the water tanks, agricultural workers need to climb ladders or step on supports and then introduce the pest control fluids or liquid fertilizers via the entrances of the tops of the water tanks. During a process in which agricultural workers climb ladders or step on supports and then introduce pest control fluids or liquid fertilizers via the opening portions of the tops of the water tanks, safety-related accidents attributable to a false step or the like occur frequently. Moreover, impurities included in the pest control fluids or liquid fertilizers are not filtered out, and thus a problem arises in that the sprinklers or spray nozzles are obstructed during pest control work.

### SUMMARY

The present invention has been conceived to overcome the above-described problems, and an object of the present invention is to provide a multipurpose water tank having an improved filtering function, which, when the water of a reservoir or stream, underground water, rainwater or the like is used as agricultural water for pest control, filters the water via a water introduction means mounted on the water tank and then introduces the filtered water into the water tank, thereby preventing a sprinkler or spray nozzle and a conduit line from being obstructed.

Another object of the present invention is to provide a multipurpose water tank having an improved filtering function, in which the water filtering portion of the water introduction means can be easily mounted and demounted by anyone, and thus the water filtering portion can be rapidly washed and washing can be frequently performed, thereby preventing a sprinkler or spray nozzle from being obstructed.

Still another object of the present invention is to provide a multipurpose water tank having an improved filtering function, in which an agricultural chemical, such as a wettable powder or a self-produced liquid fertilizer, can be easily introduced into the water tank in the state of having been filtered via a pest control fluid introduction means mounted on the side surface of the water tank, and thus the obstruction of a sprinkler or spray nozzle and a conduit line is reduced during pest control work and not only an aged agricultural worker but also a female agricultural worker can easily introduce a pest control fluid into the water tank, thereby improving the efficiency of work and preventing the risk of a safety-related accident attributable to the introduction of a pest control fluid.

In order to accomplish the above objects, the present invention provides a multipurpose water tank having an improved filtering function, including: an opening and closing cover configured to selectively open and close an opening portion formed in the top of the water tank; an accommodation space provided inside the water tank; a water introduction means provided on the upper portion of the water tank, and configured to filter agricultural water to be introduced into the water tank; and a pest control fluid introduction means provided on the side surface of the water tank, and configured to, when a pest control fluid is introduced into the water tank, filter out impurities included in the pest control fluid and then introduce the filtered pest control fluid into the water tank.

The water introduction means may include: a water introduction pipe portion fixedly mounted on the water tank in the state in which the one side thereof in its lengthwise direction communicates with the inside of the water tank; a coupler detachably coupled to one side of the water introduction pipe portion in its lengthwise direction; a hollow mounting element detachably coupled to the coupler, and configured such that a plurality of gripping recesses is formed in the inner circumference thereof; and a water filtering portion mounted such that the water filtering portion extends through the mounting element in a direction toward the bottom of the water tank and is fastened by fastening protrusions inserted into the gripping recesses.

The water filtering portion may include: a hollow mesh filtering member configured to filter out impurities included in water when the water is introduced into the water tank; a locking and gripping portion fixedly mounted in the mounting element by the fastening protrusions inserted into the gripping recesses in the state of having been coupled to one side of the mesh filtering member in its lengthwise direction; and a cover member coupled to the other side of the mesh filtering member in its lengthwise direction, and configured to close the inside of the mesh filtering member.

The mesh filtering member may include: a mesh configured to filter out impurities included in water to be introduced into the water tank; a mesh support framework installed to surround the outside of the mesh; a hollow front end mounting element mounted on one side of the mesh support framework in its lengthwise direction, and installed not to be unintentionally separated from the locking and gripping portion via coupling protrusions coupled to coupling portions formed in the locking and gripping portion; and a hollow rear end mounting element mounted on the other side of the mesh support framework in its lengthwise direction, and installed not to be unintentionally separated from the cover member via locking portions coupled to locking protrusions formed on the cover member.

A fastening member configured to fasten the other side of the water filtering portion in its lengthwise direction, which is directed to the bottom of the water tank, may be installed on an inside surface of the water tank; and the pest control fluid introduction means may include: a chemical introduction body mounted on the outside surface of the water tank; a chemical filtering mesh accommodated inside the chemical introduction body, and configured to filter out impurities included in an agricultural chemical to be introduced into the water tank; and a chemical feed pipe install such that one side thereof communicates with the inside of the water tank in the state in which the other side thereof has been connected to the chemical introduction body.

The chemical introduction body may include: a hollow accommodation member configured to accommodate the chemical filtering mesh; a chemical feed guide member integrated with the lower end of the accommodation member, and formed such that the inner diameter thereof gradually becomes narrower in a downward direction; and an outlet integrated with the chemical feed guide member, and connected to the chemical feed pipe.

### BRIEF DESCRIPTION OF THE DRAWINGS

The above and other objects, features and advantages of the present invention will be more clearly understood from the following detailed description taken in conjunction with the accompanying drawings, in which:
FIG. 1 is a perspective view showing the appearance of a multipurpose water tank according to the present invention;
FIG. 2 is a perspective view showing the appearance of a water introduction means according to the present invention;
FIG. 3 is an exploded perspective view of the water introduction means according to the present invention;
FIG. 4 is an exploded perspective view showing the appearance of a water filtering portion according to the present invention;
FIG. 5 is a perspective view showing the installation of a pest control fluid introduction means according to the present invention;
FIG. 6 is an exploded perspective view of the pest control fluid introduction means according to the present invention; and
FIG. 7 is an exploded perspective view showing the appearance of an accommodation member according to another embodiment of the present invention.

### DETAILED DESCRIPTION

Although the present invention may be subjected to various modifications and may have various embodiments, specific embodiments will be illustrated in the drawings and will be described in detail below. However, this is not intended to limit the present invention to the specific embodiments, but it should be appreciated that the present invention includes all modifications, equivalents, alternatives, etc. included in the spirit and technical range of the present invention.

Furthermore, the thicknesses of the lines, the sizes of the components, etc. shown in the drawings may be exaggerated for the sake of the clarity and convenience of description.

It should be understood that when an element is referred to as being "connected" or "coupled" to another element, it can be directly connected or coupled to the other element or an intervening element may be present. In contrast, it should be understood that when an element is referred to as being "directly connected" or "directly coupled" to another element, an intervening element is not present.

The terms used herein are used merely to describe specific embodiments of the present invention, and are not intended to limit the scope of the present invention. The meanings of the terms may vary according to the intention of a producer or manufacturer or custom. A singular form may include plural forms unless otherwise specified. It should be understood that the term "comprise" or "include" or a derivative thereof used herein refers to the presence of a characteristic, a number, a step, an operation, an element, a part, or a combination thereof, but does not exclude the present of or possibility of adding one or more other characteristics, numbers, steps, operations, elements, parts or combinations thereof.

A multipurpose water tank having an improved filtering function according to the present invention will be described below. In the following description of the present invention, when it is determined that a detailed description of a related well-known function or configuration may unnecessarily make the gist of the present invention obscure, the detailed description will be omitted.

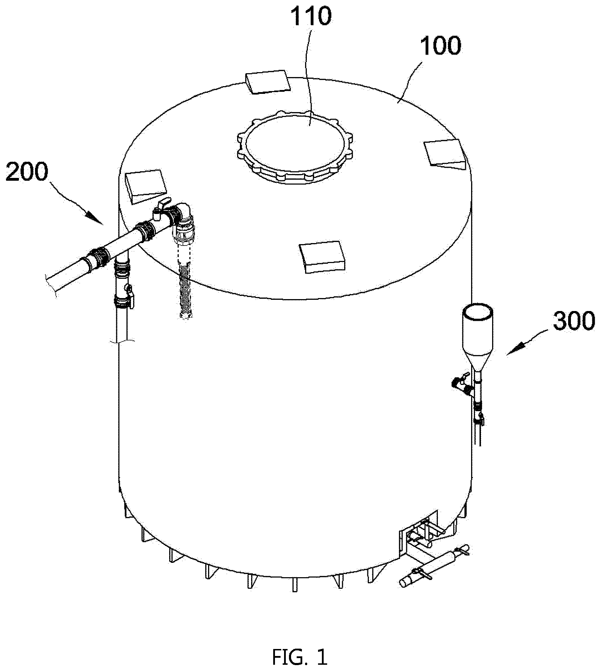

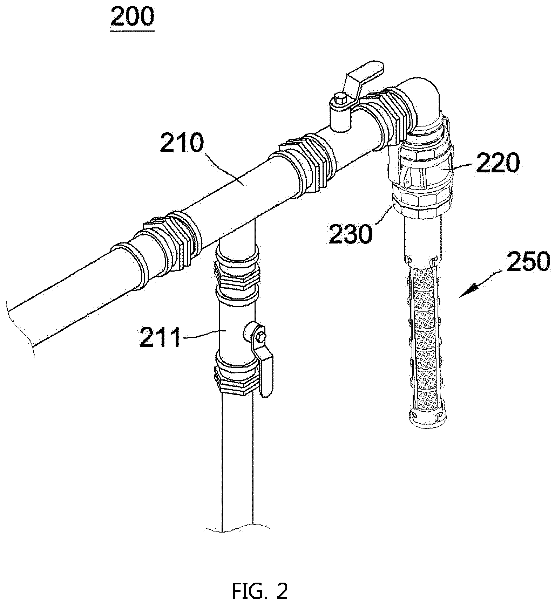

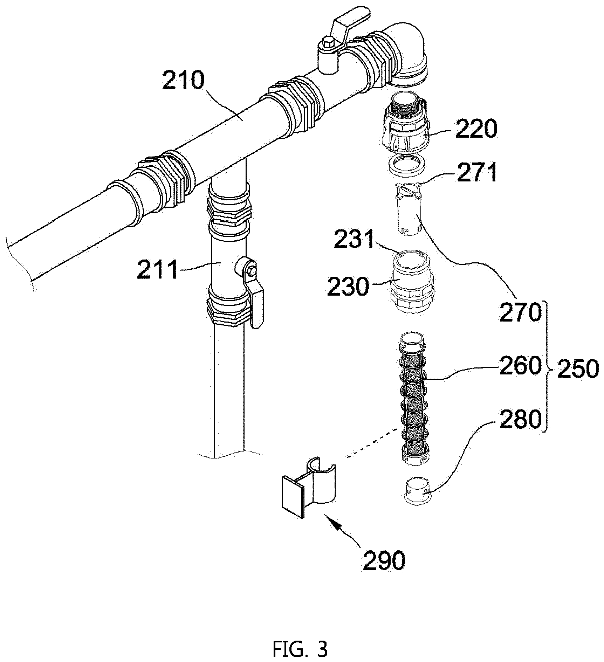

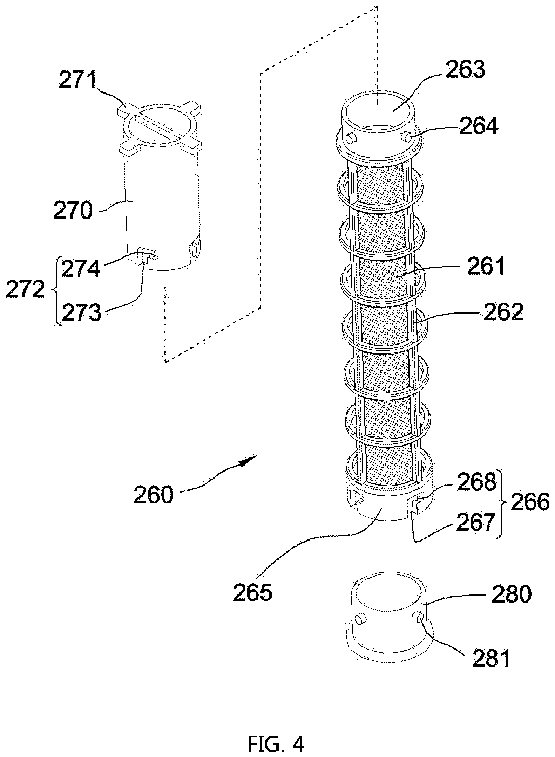

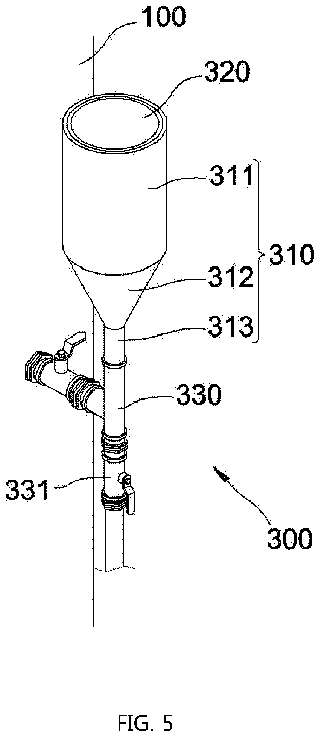

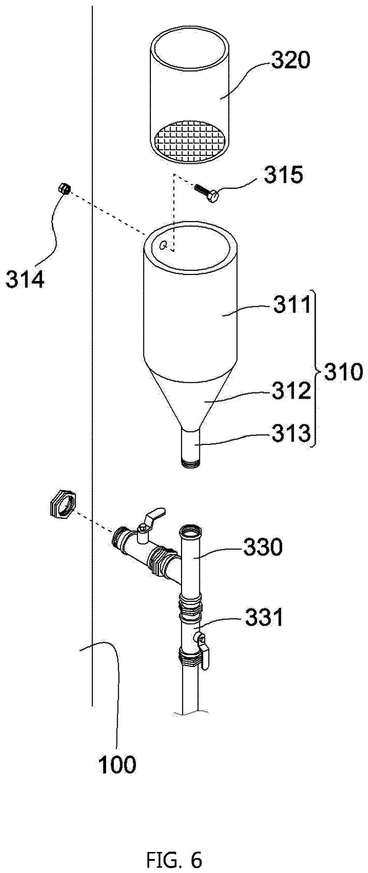

FIG. 1 is a perspective view showing the appearance of a multipurpose water tank according to the present invention, FIG. 2 is a perspective view showing the appearance of a water introduction means according to the present invention, FIG. 3 is an exploded perspective view of the water introduction means according to the present invention, FIG. 4 is an exploded perspective view showing the appearance of a water filtering portion according to the present invention, FIG. 5 is a perspective view showing the installation of a pest control fluid introduction means according to the present invention, and FIG. 6 is an exploded perspective view of the pest control fluid introduction means according to the present invention.

As shown in FIGS. 1 to 6, the multipurpose water tank having an improved filtering function according to the present invention includes: an opening and closing cover 110 configured to selectively open and close an opening portion formed in the top of the water tank; an accommodation space provided inside the water tank; a water introduction means 200 installed on the upper portion of the water tank 100; and a pest control fluid introduction means 300 installed on the side surface of the water tank 100. According to the multipurpose water tank, after the water of a reservoir or stream, underground water or the like has been introduced into the water tank 100 via the water introduction means 200, a pest control fluid is introduced into the water tank 100 via the pest control fluid introduction means 300 installed on the side surface of the water tank 100. Accordingly, the conventional inconvenience in which a user climbs to the top of a water tank by a ladder in order to introduce a pest control fluid and introduces the pest control fluid via an opening portion can be resolved, and the obstruction of a sprinkler or spray nozzle can be considerably reduced during pest control work by filtering a pest control fluid via the pest control fluid introduction means and then introducing the filtered pest control fluid into the water tank 100.

The water introduction means 200 is provided on the upper portion of the water tank 100, and is configured to filter agricultural water to be introduced into the water tank 100. Water used for pest control is generally the water of a reservoir or stream, underground water, or the like. Accordingly, when such water is used for pest control via a sprinkler or spray nozzle and a conduit line, a problem arises in that the sprinkler or spray nozzle and/or the conduit line are obstructed. According to the present invention, such a phenomenon is prevented via the water introduction means 200.

The water introduction means 200 includes: a water introduction pipe portion 210 fixedly mounted on the water tank 100 in the state in which one side of the water introduction pipe portion 210 in its lengthwise direction communicates with the inside of the water tank 100; a coupler 220 detachably coupled to the one side of the water introduction pipe portion 210 in its lengthwise direction; a hollow mounting element 230 detachably coupled to the coupler 220, and configured such that a plurality of gripping recesses 231 is formed in the inner circumference thereof; and a water filtering portion 250 mounted such that the water filtering portion 250 extends through the mounting element 230 in a direction toward the bottom of the water tank 100 and is fastened by fastening protrusions 271 inserted into the gripping recesses 231.

In other words, the water filtering portion 250 is mounted through the mounting element 230 in the state in which the coupler 220 has been screwed into the one side of the water introduction pipe portion 210 in its lengthwise direction, and then the water introduction means 200 is installed on the water tank 100 by coupling the mounting element 230 to the coupler 220.

In this case, a pipe line for introducing water is connected to the other side of the water introduction pipe portion 210 in its lengthwise direction, and a branch pipe 211 configured to connect with a washing hose is preferably branched off from the water introduction pipe portion 210.

Since anyone can easily and detachably install the water filtering portion 250 of the water introduction means 200, as described above, the water filtering portion 250 can be rapidly washed at a work site, and the obstruction of a sprinkler or spray nozzle can be prevented by frequently washing a filtering rod, thereby improving the efficiency of pest control work.

Furthermore, the water filtering portion 250 includes: a hollow mesh filtering member 260 configured to filter out impurities included in water when the water is introduced into the water tank; a locking and gripping portion 270 fixedly installed in the mounting element 230 by the fastening protrusions 271 inserted into the gripping recesses 231 in the state of having been coupled to one side of the mesh filtering member 260 in its lengthwise direction; and a cover member 280 coupled to the other side of the mesh filtering member 260 in its lengthwise direction, and configured to close the inside of the mesh filtering member 260.

In this case, the mesh filtering member 260 includes: a mesh 261 configured to filter out impurities included in water to be introduced into the water tank 100; a mesh support framework 262 installed to surround the outside of the mesh 261; a hollow front end mounting element 263 mounted on one side of the mesh support framework 262 in its lengthwise direction, and installed not to be unintentionally separated from the locking and gripping portion 270 via coupling protrusions 264 coupled to coupling portions 272 formed in the locking and gripping portion 270; and a hollow rear end mounting element 265 mounted on the other side of the mesh support framework 262 in its lengthwise direction, and installed not to be unintentionally separated from the cover member 280 via locking portions 266 coupled to locking protrusions 281 formed on the cover member 280.

The mesh 261 is installed inside the mesh support framework 262. The mesh 261 is held by the mesh support framework 262, and thus the mesh 261 is prevented from vibrating and being thus deformed during a process in which agricultural water is fed to the inside of the water tank.

Furthermore, the front end mounting element 263 is mounted on one side of the mesh support framework 262 in its lengthwise direction, and is mounted on the locking and gripping portion 270 via the coupling portions 272 and the coupling protrusions 264. In this case, the coupling protrusions 264 are first protruding keys formed to protrude from the outer circumference of the front end mounting element 263, and the coupling portions 272 include key holes 273 configured to engage with the first protruding keys and protruding key fitting slots 274 configured to extend from the inner ends of the key holes 273 at an angle different from the angle at which the key holes 273 extend.

In other words, when the first protruding keys of the front end mounting element 263 are engaged with the entrances of the key holes 273 of the locking and gripping portion 270, the front end mounting element 263 is inserted into the locking and gripping portion 270 and then the front end mounting element 263 is rotated, the first protruding keys are seated into the protruding key fitting slots 274, thereby achieving a stable coupled state.

Furthermore, the rear end mounting element 265 is mounted on the other side of the mesh support framework 262 in its lengthwise direction, and is mounted on the cover member 280 via the locking protrusions 281 and the locking portions 266. In this case, the locking protrusions 281 formed on the cover member 280 are second protruding keys formed to protrude from the outer circumference of the cover member 280, and, the locking portions 266 include coupling holes 267 configured to engage with the second protruding keys and lock fitting slots 268 configured to extend from the inner ends of the coupling holes 267 at an angle different from the angle at which the coupling holes 267 extend.

In other words, when the second protruding keys of the cover member 280 are engaged with the entrances of the coupling holes 267 of the rear end mounting element 265, the cover member 280 is inserted into the rear end mounting element 265 and then the rear end mounting element 265 is rotated, the second protruding keys are seated into the lock fitting slots 268, thereby achieving a stable coupled state.

In this case, it is noted that the coupling portions 272 formed in the locking and gripping portion 270, the coupling protrusions 264 formed on the front end mounting element 263, the locking protrusions 281 formed on the cover member 280, and the locking portions 266 formed on the rear end mounting element 265 may be replaced with female screws and male screws, and may be engaged with each other through mutual screw coupling.

Furthermore, a plurality of mesh filtering members 260 may be connected to each other via coupling protrusions 264 formed on the front end mounting element 263 of each of the mesh filtering members 260 and locking portions 266 formed on the rear end mounting element 265 of each of the mesh filtering members 260.

In other words, an appropriate number of mesh filtering members 260 are connected in accordance with the size of the water tank, and thus the filtering function of filtering out impurities included in water can be improved.

Meanwhile, the locking and gripping portion 270 of the water filtering portion 250 is struck in the mounting element 230 in the state of having been coupled to the front end mounting element 263 of the mesh filtering member 260. In this case, the fastening protrusions 271 configured to be inserted into the gripping recesses 231 of the mounting element 230 are formed to extend outward from one side of the locking and gripping portion 270 in its lengthwise direction, and the coupling portions 272 configured to engage with the coupling protrusions 264 of the front end mounting element 263 are formed in the other side of the locking and gripping portion 270 in its lengthwise direction.

In this case, when the coupling protrusions 264 of the front end mounting element 263 are replaced with screw threads, the coupling portions 272 are replaced with screw threads accordingly. When the coupling protrusions 264 of the front end mounting element 263 are first protruding keys, the coupling portions 272 include key holes 273 configured to engage with the first protruding keys and protruding key fitting slots 274 configured to extend from the inner ends of the key holes 273 at an angle different from the angle at which the key holes 273 extend.

The cover member 280 is coupled to the other side of the mesh filtering member 260 in its lengthwise direction, and covers and closes the inside of the mesh filtering member 260. The locking protrusions 281 configured to be fitted into the locking portions 266 of the rear end mounting element 265 are formed on the cover member 280.

Furthermore, a fastening member 290 configured to fasten the other side of the water filtering portion 250 in its lengthwise direction, which is directed to the bottom of the water tank 100, is installed on the inside surface of the water tank 100. During a process in which agricultural water is discharged into the water tank 100 via the water introduction pipe portion 210 and the water filtering portion 250 through high-pressure pumping, the mesh filtering member 260 of the water filtering portion 250 shakes seriously. The mesh filtering member 260 can be prevented from shaking by fastening the other side of the water filtering portion 250 in its lengthwise direction via the fastening member 290.

In other words, since one side of the water filtering portion 250 is fastened by the coupler 220 and the mounting element 230 but the other side thereof is not fastened, the other side of the water filtering portion 250 shakes seriously during a process in which agricultural water is discharged under high pressure. According to the present invention, the fastening member 290 configured to fasten the other side of the water filtering portion 250 is provided on the inside of the water tank 100, and thus the shaking of the water filtering portion 250 which occurs during the feed of agricultural water can be prevented.

Meanwhile, the pest control fluid introduction means 300 is installed on the side surface of the water tank 100 at a height which is reached by a general adult, thereby enabling a pest control fluid to be easily introduced into the water tank. The reason for this is to enable an aged agricultural worker to easily perform pest control fluid introduction work.

The pest control fluid introduction means 300 includes: a chemical introduction body 310 mounted on the outside surface of the water tank 100; a chemical filtering mesh 320 accommodated inside the chemical introduction body 310, and configured to filter out impurities included in an agricultural chemical to be introduced into the water tank 100; and a chemical feed pipe 330 installed such that one side thereof communicates with the inside of the water tank 100 in the state in which the other side thereof is connected to the chemical introduction body 310.

In other words, when a liquid-state agricultural chemical is introduced into the chemical filtering mesh 320, the agricultural chemical is discharged into the inside of the water tank 100 via the chemical feed pipe 330 in the state in which impurities have been filtered out by the chemical filtering mesh 320, and thus the obstruction of a sprinkler or spray nozzle and/or a conduit line can be considerably reduced during pest control work.

Furthermore, the work of introducing a pest control fluid into the water tank is simple, and thus not only an aged agricultural worker but also a female agricultural workers can easily introduce a pest control fluid into the water tank, thereby improving the efficiency of work and preventing the risk of a safety-related accident attributable to the introduction of a pest control fluid from occurring.

Furthermore, the chemical introduction body 310 includes: a hollow accommodation member 311 configured to accommodate the chemical filtering mesh 320; a chemical feed guide member 312 integrated with the lower end of the accommodation member 311, and formed such that the inner diameter thereof gradually becomes narrower in a downward direction; and an outlet 313 integrated with the chemical feed guide member 312, and connected to the chemical feed pipe 330.

In other words, when an agricultural worker introduces a liquid-state agricultural chemical into the chemical filtering mesh 320, the liquid-state chemical filtered by the chemical filtering mesh is moved in the direction of the outlet 313 along the chemical feed guide member 312. In this case, a predetermined hydraulic pressure is formed, and thus the liquid-state chemical can be easily discharged into the water tank 100 via the chemical feed pipe 330, connected to the outlet 313, without requiring a separate pumping member.

Furthermore, the accommodation member 311 of the chemical introduction body 310 is configured to be fastened via a fastening bolt 315 which engages with a fastening nut 314 installed on the side surface of the water tank 100.

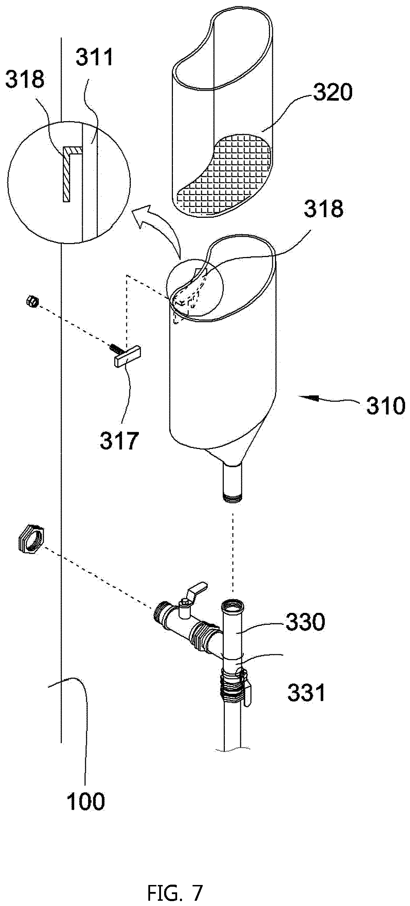

Furthermore, the accommodation member 311 is configured such that a hook 318 formed on the side surface of the accommodation member 311 is hung on a support member 317 formed on the side surface of the water tank 100, as shown in FIG. 7. The side surface of the accommodation member 311 opposite the water tank 100 is preferably formed to match the corresponding portion of the outer circumference of the water tank 100 so that the accommodation member 311 comes into tight contact with the opposite water tank 100.

Furthermore, it is noted that a separate washing branch pipe 331 may be connected to the chemical feed pipe 330 and, thus, the pest control fluid introduction means 300 can be easily washed.

According to the present invention, when the water of a reservoir or stream, underground water, rainwater or the like is used as agricultural water for pest control, the water is filtered via a water introduction means mounted on the water tank and is then introduced into the water tank, thereby preventing a sprinkler or spray nozzle and a conduit line from being obstructed. The water filtering portion of the water introduction means can be easily mounted and demounted, and thus the water filtering portion can be rapidly washed and washing can be frequently and smoothly performed, thereby desirably preventing a sprinkler or spray nozzle from being obstructed.

Furthermore, a liquid agricultural chemical can be easily introduced into the water tank in the state of having been filtered via a pest control fluid introduction means mounted on the side surface of the water tank, and thus the obstruction of a sprinkler or spray nozzle and a conduit line is reduced during pest control work and not only an aged agricultural worker but also a female agricultural worker can easily introduce a pest control fluid into the water tank, thereby improving the efficiency of work and preventing the risk of a safety-related accident attributable to the introduction of a pest control fluid.

Although the present invention has been described in detail above, it will be apparent to those having ordinary knowledge in the art to which the present invention pertains that various modifications and alterations may be made without departing from the scope of the present invention. Therefore, the scope of the present invention is not limited to the above-described embodiments, and should be defined by not only the attached claims but also equivalents to the claims.

## Claims

1. A multipurpose water tank having an improved filtering function, comprising:
an opening and closing cover configured to selectively open and close an opening portion formed in a top of the water tank;
an accommodation space provided inside the water tank;
a water introduction means provided on an upper portion of the water tank, and configured to filter agricultural water to be introduced into the water tank; and
a pest control fluid introduction means provided on a side surface of the water tank, and configured to, when a pest control fluid is introduced into the water tank, filter out impurities included in the pest control fluid and then introduce the filtered pest control fluid into the water tank;
wherein the pest control fluid introduction means comprises: a chemical introduction body mounted on an outside surface of the water tank; a chemical filtering mesh accommodated inside the chemical introduction body, and configured to filter out impurities included in an agricultural chemical to be introduced into the water tank; and a chemical feed pipe install such that one side thereof communicates with an inside of the water tank in a state in which a remaining side thereof has been connected to the chemical introduction body.

2. The multipurpose water tank of claim 1, wherein the water introduction means comprises: a water introduction pipe portion fixedly mounted on the water tank in a state in which an one side thereof in its lengthwise direction communicates with the inside of the water tank; a coupler detachably coupled to one side of the water introduction pipe portion in its lengthwise direction; a hollow mounting element detachably coupled to the coupler, and configured such that a plurality of gripping recesses is formed in an inner circumference thereof; and a water filtering portion mounted such that the water filtering portion extends through the mounting element in a direction toward a bottom of the water tank and is fastened by fastening protrusions inserted into the gripping recesses.

3. The multipurpose water tank of claim 2, wherein the water filtering portion comprises: a hollow mesh filtering member configured to filter out impurities included in water when the water is introduced into the water tank; a locking and gripping portion fixedly mounted in the mounting element by the fastening protrusions inserted into the gripping recesses in a state of having been coupled to one side of the mesh filtering member in its lengthwise direction; and a cover member coupled to a remaining side of the mesh filtering member in its lengthwise direction, and configured to close an inside of the mesh filtering member.

4. The multipurpose water tank of claim 3, wherein the mesh filtering member comprises: a mesh configured to filter out impurities included in water to be introduced into the water tank; a mesh support framework installed to surround an outside of the mesh; a hollow front end mounting element mounted on one side of the mesh support framework in its lengthwise direction, and installed not to be unintentionally separated from the locking and gripping portion via coupling protrusions coupled to coupling portions formed in the locking and gripping portion; and a hollow rear end mounting element mounted on a remaining side of the mesh support framework in its lengthwise direction, and installed not to be unintentionally separated from the cover member via locking portions coupled to locking protrusions formed on the cover member.

5. The multipurpose water tank of claim 2, wherein a fastening member configured to fasten a remaining side of the water filtering portion in its lengthwise direction, which is directed to the bottom of the water tank, is installed on an inside surface of the water tank.

6. The multipurpose water tank of claim 1, wherein the chemical introduction body comprises: a hollow accommodation member configured to accommodate the chemical filtering mesh; a chemical feed guide member integrated with a lower end of the accommodation member, and formed such that an inner diameter thereof gradually becomes narrower in a downward direction; and an outlet integrated with the chemical feed guide member, and connected to the chemical feed pipe.
